Europäisches Patentamt

European Patent Office

Office européen des brevets

(11) Publication number: **0 138 582**
**B1**

## (12) EUROPEAN PATENT SPECIFICATION

(45) Date of publication of patent specification: **27.12.89**

(21) Application number: **84306953.5**

(22) Date of filing: **11.10.84**

(51) Int. Cl.⁴: **A 23 L 1/48,** A 23 G 3/00

(54) Food binder composition.

(30) Priority: **11.10.83 US 540643**

(43) Date of publication of application:
**24.04.85 Bulletin 85/17**

(45) Publication of the grant of the patent:
**27.12.89 Bulletin 89/52**

(84) Designated Contracting States:
**AT BE CH DE FR GB IT LI LU NL SE**

(56) References cited:
**US-A-3 840 685**
**US-A-4 145 488**
**US-A-4 451 488**

(73) Proprietor: **NABISCO BRANDS, Inc.**
**Nabisco Brands Plaza**
**Parsippany New Jersey 07054 (US)**

(72) Inventor: **LaBaw, Glenn D.**
**11, Heather Lane**
**Greenwich Connecticut 06830 (US)**
Inventor: **Meyer, Stephen E.**
**20, Sugarbush Court**
**Wilton Connecticut 06897 (US)**

(74) Representative: **Thomas, Roger Tamlyn et al**
**D. Young & Co. 10 Staple Inn**
**London WC1V 7RD (GB)**

EP 0 138 582 B1

Courier Press, Leamington Spa, England.

## Description

In recent years, mixtures of nutmeats, cereals and/or dried or sugar-infused fruits have become popular as snacks or quick energy foods. Mixtures which contain nuts, cereals, such as granola, and fruit are commonly referred to as trail mixes or trail mixtures. Due to difficulties associated in packaging and preserving such loose mixtures of differently texture and sized ingredients, methods have been sought to bind the various ingredients into food bars which are convenient to handle and consume and which may be easily packaged, shipped and displayed.

One form of this food product is the nut bar which typically consists of nutmeats bound together by an edible matrix. The most common matrix for this type of food bar is formed almost entirely of sucrose which is applied to the nuts as a syrup and which becomes crystalline upon evaporation of the water. Such bars thus rapidly develop a crunchy, crisp texture upon storage.

Another form of a read-to-eat food bar is the granola bar which typically consists of a major portion of granola, e.g., rolled oats and/or wheat, and minor amounts of fruit and/or nuts. These bars are commonly cemented by a baked cookie-type matrix comprising crumbs of the cereal product saturated with sugar and vegetable oils. Similar bars replace a part or all of the granola with other processed cereals such as puffed wheat or rice. These bars are typically dry and friable in texture. Such fat-occluded food compositions are disclosed in U.S. Pat. US—A—4,055,669.

On the opposite range of the textural scale are gelatin-based marshmallow-type matrices such as those disclosed in U.S. Patent US—A—4 145 448 which may be used to bind cereal products and vitamins. Such products are spongy and sticky in texture, and do not possess optimal binding properties for ranch-mix type products.

U.S. Patent US—A—3,840,685 describes a process and composition for coating cereals with an oil-in-water emulsion in which the aqueous phase is a sugar syrup and the oil phase is an edible oil- or fat-derived oleaginous material and in which the emulsifier is distilled monoglycerides. The individual coated cereal particles are dried by heating to a moisture content of 2—3%.

Ranch mixes typically comprise whole or halved nutmeats and large fruit fragments. Due to the larger size and weight of these materials, the physical properties of the binder required to firmly join them into a flexible bar must be carefully adjusted.

As hereinafter described in detail, the present invention provides an edible binder for mixtures of nuts, fruits and/or cereal pieces which allows such mixes, e.g., trail mixes, to be bound into bars, more specifically flexible, elastic bars, without imparting undue stickiness to the bound mixture. The binder composition will preserve the moistness and biologically stabilize a mixture of fruits, nuts and cereal and is a suitable plastic matrix for food bars comprising large, e.g., whole or halved, nutmeats.

Brief description of the invention

In accordance with the invention a ranch-type mix may be bound in a matrix of a particularly compounded and treated mixture of fat, sugar, water, and, optionally, a polyhydric alcohol. The sugar component of the binder mixture will comprise a mixture of partially caramelized, crystallization-resistant sugars and sucrose, a sugar which, if used alone, would readily crystallize under the conditions of bar formation and storage. All percentages given represent weight percents unless otherwise noted. As used herein with respect to the binder compositions, the term sugar or noncrystallizing sugar is intended to include both uncaramelized sugars and the products of sugar caramelization.

According to one aspect of the invention the binder compositions may be prepared by:

a) forming a substantially homogeneous aqueous mixture of about 10—30% sucrose, about 15—40% water, at least one non-crystallizing sugar which is caramelizable at a temperature below about 300°F (149°C), and fat in a weight ratio to total sugar solids of about 1:1.5—5;

b) heating said mixture to a temperature sufficient to at least partially caramelize the caramelizable non-crystalline sugar without caramelizing the sucrose;

c) cooling the heated mixture to room temperature to provide a binder composition which is plastically deformable and substantially non-crystalline.

In one preferred embodiment, the present process for preparing binder compositions comprises:

a) forming a premix of about 15—25% sucrose, about 17—30% of an about 28—75 D.E. corn syrup; about 10—15% honey, about 0.25—1.5% lecithin, about 15—25% water and about 3—7% glycerin;

b) heating said premix to about 88—102°F (31—39°C);

c) adding about 10—15% of plastic shortening to the heated premix; and

d) heating the fat-containing premix to about 240—270°F (116—132°C) for a period of time sufficient to reduce the water content of the premix to about 5—10% and to partially caramelize the non-crystallizing sugars, to provide a homogeneous binder composition which is plastically deformable and substantially non-crystalline at room temperature.

A more general aspect of the process comprises a process for the preparation of an edible food composition comprising:

a) forming a premix of about 10—30% sucrose, about 15—40% water, an edible polyhydric alcohol, minor effective amounts of emulsifier and one or more non-crystallizing sugars; wherein the ratio of sucrose to non-crystallizing sugar is about 1:0.8—3;

b) heating the premix to about 88—102°F (31—39°C);

c) blending in fat to provide a ratio of sugar solids to added fat in the premix of about 1:1.5—5; and

d) heating the fat-containing blend for a period of time sufficient to lower the water content of the mixture to about 5—10% and to partially caramelize the non-crystallizing sugars while maintaining the sucrose in a non caramelized condition; and

e) cooling said blend to room temperature to provide a homogeneous binder composition which is plastically deformable and substantially non-crystalline at room temperature.

The invention also provides an edible composition for binding solid food materials comprising a substantially-homogeneous blend of about 5—10% water, sugar, and about 15—30% fat, wherein the ratio of sugar to fat is about 1:1.5—5, the sugar component comprises sucrose and a second sugar component comprised of one or more partially caramelized non-crystallizing sugars wherein the ratio of sucrose to said second sugar component is about 1:0.8—3, and wherein the composition is substantially non-crystalline and plastically deformable at room temperature, e.g., at about 65—75°F (18—24°C). As well as being plastic and non-crystalline, the composition has also been found to be non-tacky.

In a preferred embodiment of the invention, there is provided an edible binder composition useful for binding solid food materials comprising a substantially homogeneous blend of:

(a) about 4—8% water;

(b) about 15—30% of a plastic mixture of partially hydrogenated palm kernel and soybean oil;

(c) about 0.25—1.5% lecithin;

(d) about 20—30% sucrose;

(e) about 3—7% glycerin; and

(f) one or more partially caramelized non-crystallizing sugars wherein the ratio of sucrose to said partially caramelized sugar component is about 1:1—2, and wherein the composition is substantially non-crystalline and plastically deformable at room temperature.

The invention also extends to a flexible moist food bar comprising solid ingredients bound together by a matrix of the composition of the invention.

As used herein, the term "plastic" refers to a composition which is plastically deformable at room temperature, e.g., which offers flexible resistance to a solid probe, deforming rather than breaking or running. At ambient temperatures (65—75°F=18—24°C), a body of one of the present compositions would preferably require a pressure of from about 0.15—3 kg/cm$^2$, most preferably about 0.18—2.5 kg/cm$^2$ to deform it to the extent of about 50%. The resistance of the compositions described herein to deformation increases as the temperatures employed to reduce the water content of the premix are increased.

Compositions of the invention have been found to be suitable for binding ranch-mixes of solid particulate ingredients into food bars. As used herein, the phrase "ranch mix" or "ranch mixture" refers to a loose mixture of a major portion of nutmeats in combination with fruit, e.g., dehydrated or infused whole fruit or fruit pieces, and a processed cereal such as granola. Bars comprising nutmeats as the sole particulate food additive may also readily be prepared using the present binders. Preferably whole, halved or chopped nutmeats will comprise at least about 35—50% of the total solid ingredients incorporated into the present bars, and are typically used in combination with a mixture of about equal amounts of fruit and cereal, since it has been found that such mixtures provide an attractive blend of tastes and textures, as well as being desirable from a nutritional standpoint.

To form the food bars of the present invention, a mixture of solid ingredients may be added to a binder mixture at the point at which the water level of the binder has been reduced to the desired level and the binder has been partially caramelized but the caramelized mixture has not yet been cooled to room temperature. Upon cooling to room temperature, a mixture of solid ingredients in a plastic matrix is obtained which is firmly but flexibly bound and which retains its initial mixture of chewy and/or crisp textures for extended periods of storage.

Detailed description of the preferred embodiments

To prepare the preferred binder compositions, a premix is first formed which incorporates a sugar mixture of non-crystallizing sugars and sucrose, which preferably comprises about 10—30% by weight sucrose, preferably about 15—25%. The sucrose may be incorporated in any convenient form, but for purposes of the present invention, brown sugar is preferred due to its characteristic flavor. However, confectioner's sugar, granular cane sugar or the like may also be employed. After most of the water has been evaporated by the heating step, the binder will comprise about 15—35% sucrose, preferably about 20—30% sucrose which will not have been structurally altered by caramelization reactions.

The tendency of sucrose to crystallize out of the binder mixture as it is cooled as to thus render the finished bars brittle and hard is counteracted by the addition to the binder mixture of about 5—25%, preferably about 10—20% of one or more non-crystallizing sugars. These sugars bind water and are non-crystallizable or only slowly crystallizable relative to sucrose, and function to inhibit sucrose crystallization under the conditions of bar formation and storage. Such non-crystallizing sugars include fructose, dextrose, maltose, invert sugar, high fructose corn syrups, high D.E. corn syrups, honey, low molecular weight saccharides and the like. The sugar component of the binder may comprise an about 28—75 D.E. corn syrup or blends of various corn syrups. The non-crystallizing sugars employed may comprise at least about 15% and above of the total sugar component.

Of the noncrystallizing sugars, fructose, dextrose and mixtures thereof are preferred, and may be provided by a number of sources. A 42 D.E. corn syrup useful in the practice of this invention may have a water content of about 19.7% and a total sugar solids content of about 80.3% (18.5% dextrose, 13.9% maltose, 11.6% trisaccharides and 56% higher saccharides). An equivalent amount of 36 D.E. corn syrup may also be used (79.9% solids; 14.1% dextrose; 11.7% maltose plus 74.2% higher saccharides). Such syrups are available under the designation Cornsweet® from ADM Foods, Cedar Rapids, Iowa. A useful high fructose-dextrose syrup comprises 23.5% water and the remainder 55% fructose and 45% dextrose. A fructose concentrate suitable for use herein is an aqueous syrup having 80% sugar of which 90% is fructose and 10% is dextrose. Lower D.E. corn syrups or corn syrup solids may also be employed in some cases. Corn syrups will typically comprise about 17—30% of the binder mixture prior to heating.

Natural or synthetic honey is another preferred source of crystallization-resistant sugars and typically comprises about 62—83% invert sugar, 0—8% sucrose and 0.26—7% dextrin. When honey is employed it will typically comprise about 10—15% of the binder mixture prior to heating. For example, an about 1:1.5—2.5 ratio of honey to an about 30—50 D.E. corn syrup will be employed in the binder premix to provide the non-crystallizing sugar component.

In practice, the binder composition's ingredients minus the fat are mixed together and heated to about the melting point of the fat, at which point the fat is added. The temperature of the fat-containing premix is then raised, preferably to about 230—290°F (110—143°C). The initial water content of the premix is about 15 to about 40%, preferably about 20—35%. The amount of water initially added and the heating conditions are adapted to reduce the water content of the premix to about 5—10%, preferably 4—8% by weight of the mixture. The finished bars possess a similar weight percent of water which functions, along with the high sugar content, to lower the water activity of the bars and to render them resistant to microbial spoilage. The heating process also partially caramelizes the non-crystallizing sugars to an extent sufficient to permit the binder to effectively bind the mixed-in solids upon cooling to room temperature.

To achieve the desired physical properties in the binder compositions, the premix of ingredients is heated under controlled conditions so as to partially caramelize the non-crystallizing sugars which are present while leaving the sucrose in a noncaramelized state. It has been found that when premixes comprising the percentages of sugar and water as described above are heated to about 230—290°F (110—143°C) for a period of time sufficient to reduce their water contents to about 5—10%, the selective caramelization of the non-crystallizing sugars occurs to the desired extent.

The chemical changes which occur when sugars caramelize involve molecular rearrangements and polymerizations which are not readily susceptible to precise description. For example, fructose rapidly caramelizes at temperatures above about 260°F (127°C) whereas sucrose remains relatively unaltered until heated above about 300°F (149°C). Such processes will effect the color, viscosity and plasticity of the finished binder mixture, imparting thereto physical characteristics such as are commonly associated with caramel confections. In preferred embodiments, bodies of the finished binder compositions of the present invention will require a pressure of about 0.15—3 kg/cm², preferably about 0.175—2.5 kg/cm² pressure to plastically deform them to the extent of about 50% under ambient temperatures and humidities.

Such compositions act to firmly coat and bind relatively large, nonporous food particles such as nutmeats. The resultant mixtures can be facilly shaped into bars, cylinders and the like which retain their structural integrity and remain moist and flexible for long periods of time. These desirable effects are believed to be due at least in part to the relationship which is achieved between the water activity of the binder composition and the water activity of the nut and fruit pieces which are bound therewith. Preferably, the water content of the binder will be about 2—4% higher than the average water content of the solid ingredients used.

The finished ranch-mix bars are both elastic and flexible. As used herein the term elastic is measured in terms of the tensile strength of the binder matrix of the bar, e.g. the force required to completely separate two adjacent solid fragments and draw the connective binder into a thin plastic thread. When measured in this fashion, the Instron® elasticity of the bars will generally fall within the range of about 0.1—0.6 kg/cm², preferably about 0.15—0.5 kg/cm² as measured at ambient temperatures and humidities.

As used herein the term flexibility relates to the ability of the present bars to bend from a planar configuration without breaking. The flexibility of the present bars is measured in terms of the force required to bend the bars with a centrally-placed wedge until they break.

Preferably finished bars about 1.25 inches (3.2 cm) thick and having a ratio of binder to solids of about 1:1—3 will require a force of from about 5—20 kg, preferably about 6—17.5 kg to be bent to the breaking point, the larger forces representing greater flexibility. It has been found that the more acidic fruits such as apricots and pineapple tend to decrease the flexibility and elasticity of the binder matrix when incorporated into bars under otherwise similar formation conditions.

Although the sugar-water mixture described above will largely contribute the necessary elasticity and flexibility to the finished trail mix bar, it has been found that mixture of fat and emulsifier is necessary to fully realize certian desirable features of the ranch mix bars, namely to reduce the stickiness of the bars so that they may be conveniently handled and packaged. To this end the binder mixture will comprise, prior to caramelization, about 7—30%, preferably about 10—25% of a fat which will be solid at storage conditions commonly encountered by the bars, and preferably fat having a Wiley Melt Point close to that of body temperature, e.g., within the range of about 88—102°F (31—39°C), most preferably about 90—100°F

4

(32—38°C). Suitable shortenings are obtained by partially hydrogenating naturally-occurring liquid glyceride oils such as cottonseed oil, soybean oil, safflower oil, corn oil, olive oil, coconut oil, peanut oil, rapeseed oil, sesame seed oil, sunflower seed oil and mixtures thereof. Typically, the fat component will consist of a plastic shortening, e.g., a mixture of partially hydrogenated soybean, palm kernel or cottonseed oils. Some preferred fats are the SP-2 and SP-3 fractionated lauric hard butters (Stokely Van-Camp, Columbus, Ohio). Reduction of the fat content to as low as about 6—7% will provide an acceptable binder mixture, even though the reduction in tackiness is not optimal. The finished binder composition will preferably comprise about 15—30% fat preferably about 17—25% fat, the ratio of sugar solids to fat in the binder mixture will be about 1:1.5—5, preferably about 1:2—4.

The binder compositions will also comprise a minor but effective amount of an emulsifier which functions to homogeneously disperse the fat in the water present in the mixture. An especially preferred emulsifier is lecithin, its edible derivatives or related purified phospholipids. About 0.125—2% of emulsifier may be employed in the present binder compositions; about 0.25—1.5% lecithin is preferred.

One or more edible polyhydric alcohols are also optionally incorporated into the present binder composition in order to enhance the water-binding properties of the finished bar and to improve mouth feel. Useful polyhydric alcohols include diols and polyols such as propylene glycol, sorbitol and glycerol. Preferred materials are stable diols or triols which may be readily emulsified and combined with the present binder compositions. Of the polyhydric alcohols useful in the present formulations, glycerol is preferred and will preferably be present at a concentration of about 2—10%, preferably about 3—7% by weight.

Minor but effective amounts of coloring and flavoring may be added to the binder mixture, preferably prior to the addition of the solid ingredients, at the point when heating is discontinued. Suitable flavorings include salt, chocolate, caramel, cocoa, coffee, vanilla, cinnamon, fruit flavorings or essences and the like. Additives which supplement the protein content of the finished bar such as non-fat milk solids, casein, whey, soy concentrates and protein hydrolysates may also be added in appropriate amounts.

After the combination of binder ingredients has been heated to 230—290°F (110—143°C) for a period of time sufficient to partially caramelize the non-crystallizing sugars and to lower the water content to the desired level, a dry premix of solid ingredients is added to the hot mixture. Suitable solid ingredients are typically selected from the group consisting of nuts, processed cereals, fruits and mixtures thereof. Characteristic nutmeats useful in the invention will include peanuts, macadamia nuts, walnuts, cashews, almonds, textured vegetable bean extracts or legumes, sesame seeds, sunflower nutmeats, coconut and/or hazelnuts. Typically used fruit will include sugar-infused or otherwise dehydrated pineapple, cherries, peaches, apples, raisins, blueberries, raspberries, citron, apricots, bananas, pears and the like. Useful cereal products include flaked, puffed or otherwise processed wheat, rice, corn, buckwheat, oats and the like. Granola is a preferred cereal product for use with the present binder composition as its loose combination with peanuts and raisins has long been recognised as an acceptable trail mix. Preferred bars may comprise about 15—35% nuts in combination with about 5—25% fruit and 15—25% processed cereal; for example about 20—30% peanuts, almonds or walnuts, about 17—24% granola and about 5—20% apricots, raisins, pineapple or dehydrated apples.

The weight ratio of such solid food additives to the binder matrix may be widely varied. Preferably the final bar ratio of binder to solids will fall within the range of about 1:1—3, preferably about 1:1.25—2.5.

To prepare the ranch-mix bars of the present invention, the solid ingredients are dry-blended in a suitable mixer. The temperature of a sugar/water premix is raised to the melting point of the fat component which is then added. The temperature of the liquid mixture is raised to about 230—290°F (110—143°C) preferably about 240—270°F (116—132°C). At this temperature, the moisture level is reduced to about 4—6% and the mixture is partially caramelized. This both effectively stabilizes the mixture against microbial degradation and increases its binding power, e.g. its plasticity. The mixture of solids is then added to the hot binder and the hot, flowable mixture flattened into bars or another suitable form and cooled in order to set the binder. The cooled bars are then cut, if necessary, further cooled and separated.

The invention will be further illustrated by the following examples.

Example 1

Binder mixtures were prepared using the ingredients listed on Table I.

EP 0 138 582 B1

## TABLE I
### Binder mixtures

| | A | | B | |
|---|---|---|---|---|
| Ingredient | g/batch | Wt. % | g/batch | Wt. % |
| 42 D.E. Corn syrup | 45.0 | 23.9 | 35.0 | 21.0 |
| Honey | 22.0 | 11.9 | 22.5 | 12.8 |
| Brown sugar | 45.0 | 23.9 | 35.0 | 21.0 |
| Fat | 30.0[1] | 15.9 | 35.0[2] | 21.0 |
| Lecithin | 1.1 | 0.6 | 1.1 | 0.6 |
| Water | 35.0 | 18.6 | 35.0 | 21.0 |
| Salt | 2.25 | 1.2 | 1.28 | 0.75 |
| Glycerin | 7.4 | 3.9 | 4.2 | 2.5 |

[1] SP-3 Fractionated Lauric Hard Butter (Stokely Van-Camp, Columbus, Ohio); partially hydrogenated palm kernel and soybean oil, Wiley Melting Pt. 96—99°F (35.5—37.2°C); 68% solids at 50°F (10°C); 8.0% solids at 92°F (33.3°C).
[2] SP-2 Fractionated Lauric Hard Butter (Stokely Van-Camp); Wiley Melting Pt. 91—94°F (32.8—34.4°C); 70% solids at 50°F (10°C); 6% solids at 92°F (33.3°C).

To prepare the ranch-mix bars of the present invention, the ingredients of Table I, Col. A or B minus the fat were first blended in a steam-jacketed kettle and heated to 100°F (38°C) with continuous mixing to form a premix. As the temperature of the mixture rose over 100°F (38°C) the fat component was added. When the binder temperature reached 260°F (127°C) (250°F (121°C) for apple-containing products) a mixture of any one of the solid ingredient groups listed on Table II was added with gentle blending and heating was discontinued.

If binder A was cooled to room temperature without the addition of solid ingredients, a non-tacky plastic, caramel-like body was obtained which exhibited an Instron® texture (plasticity) of 0.53 (kg) and 4.8 (kg) respectively as measured for the samples prepared at 250°F (121°C) and 260°F (127°C), respectively (3 cm×1 cm bars compressed with 3.6 cm² probe to a one-half cm height (50% deformation).

## TABLE II
### Solid additives

| | A | | B | | C | |
|---|---|---|---|---|---|---|
| Ingredient | g/batch | Wt. % (bar) | g/batch | Wt. % (bar) | g/batch | Wt. % (bar) |
| Raisins | 88.6 | 18.3 | — | — | | |
| Peanuts | 118.0 | 24.4 | — | — | | |
| Granola | 88.6 | 18.3 | 88.6 | 18.9 | 88.65 | 21.7 |
| Apricots[1] | — | — | 88.6 | 18.9 | — | — |
| Almonds | — | — | 118.6 | 25.3 | — | — |
| Dehydrated apples | — | — | — | — | 30.0 | 7.5 |
| Walnuts | — | — | — | — | 118.2 | 29.1 |

[1] Turkish apricots—Pineapple could also be substituted.

6

The blended solids-binder mixture was poured onto a stainless steel cooling table, flattened and passed through a cooling tunnel (40°F (4.4°C)) to set the binder. After the first cooling pass, the bars were cut into one-half inch (1.3 cm) thick×4.375×1.25 inch (11.1×3.2 cm) bars, cooled to ambient temperatures and packaged in individual metallized paper wrappings. Table III summarizes flexibility and tensile strength (elasticity) of a number of bars prepared by combining binder A of Table I with the solid ingredient mixtures of Table II.

TABLE III
Bar properties

| Bar type[1] | | |
|---|---|---|
| Binder (Table I)/ solids (Table II) | Flexibility[2] (kg) | Tensile strength[3] (kg/cm²) |
| A/A | 16.3 | 0.38 |
| A/C | 13.9 | 0.49 |
| A/B | 7.3 | 0.19 |
| A/B (Pineapple) | 8.2 | 0.17 |

[1] All binder compositions caramelized at 250°F (121°C); five bars tested per run.
[2] Bar placed over 1 cm gap and bent with plastic wedge until completely broken.
[3] Force required to part bar completely.

The bars remained flexible, elastic and chewy and the fruit component remained moist during storage of the wrapped bars under ambient conditions for at least six months. The solid components remained firmly bound by the binder matrix which retained substantially all of its initial plasticity.

**Claims**

1. An edible composition for binding solid food materials comprising a substantially-homogeneous blend of about 5—10% water, sugar, and about 15—30% fat, wherein the ratio of sugar to fat is about 1:1.5—5, the sugar component comprises sucrose and a second sugar component comprised of one or more partially caramelized non-crystallizing sugars wherein the ratio of sucrose to said second sugar component is about 1:0.8—3, and wherein the composition is substantially non-crystalline and plastically deformable at room temperature.

2. The composition of claim 1 further comprising about 3—7% by weight of an edible polyhydric alcohol.

3. The composition of claim 2 wherein the alcohol is glycerol.

4. The composition of any preceding claim further comprising about 0.25—1.5% lecithin.

5. The composition of any preceding claim wherein the non-crystallizing sugars are provided by a mixture of corn syrup and honey.

6. The composition of any preceding claim comprising about 20—30% sucrose.

7. The composition of claim 4 wherein the fat has a Wiley Melt Point within the range of about 88—102°F (31—39°C), and includes a minor amount of an emulsifier.

8. The composition of claim 7 wherein the ratio of sugar solids to fat is about 1:2—4.

9. An edible binder composition useful for binding solid food materials comprising a substantially homogeneous blend of:
(a) about 4—8% water;
(b) about 15—30% of a plastic mixture of partially hydrogenated palm kernel and soybean oil;
(c) about 0.25—1.5% lecithin;
(d) about 20—30% sucrose;
(e) about 3—7% glycerin; and
(f) one or more partially caramelized non-crystallizing sugars wherein the ratio of sucrose to said partially caramelized sugar component is about 1:1—2, and wherein the composition is substantially non-crystalline and plastically deformable at room temperature.

10. The composition of claim 9 wherein the ratio of sugar solids to fat is about 1:2—4.

11. The composition of claim 9 or 10 wherein the non-crystallizing sugars comprise invert sugar.

12. The composition of claim 9, 10 or 11 wherein the Wiley Melt point of the oils is about 90—100°F (32—38°C).

13. The composition of any preceding claim which is plastically deformable to the extent of about 50% by a pressure of about 0.15—3 kg/cm².

14. The composition of claim 13 wherein the pressure is about 0.175—2.5 kg/cm².

EP 0 138 582 B1

15. A flexible, moist food bar comprising solid ingredients bound together by a matrix of the composition of any preceding claim.

16. The bar of claim 15 wherein the ratio of binder to solid ingredients is about 1:1—3.

17. The bar of claim 15 or 16 wherein the solid ingredients are selected from nutmeats, fruit, processed cereals and mixtures thereof.

18. The bar of claim 17 wherein the nutmeats comprise at least about 35—50% by weight of the solid ingredients.

19. The bar of claim 16 which exhibits a flexibility of about 5—20 kg and a tensile strength of about 0.1—0.6 kg/cm².

20. The bar of claim 19 comprising about 15—35% nutmeats, about 5—25% fruit and about 15—25% processed cereal, and wherein the ratio of binder to solid ingredients is about 1:1.25—2.5.

21. The bar of claim 20 wherein the cereal is granola.

22. A process for the preparation of an edible food composition comprising:

a) forming a premix of about 10—30% sucrose, about 15—40% water, an edible polyhydric alcohol, minor effective amounts of emulsifier and one or more non-crystallizing sugars; wherein the ratio of sucrose to non-crystallizing sugar is about 1:0.8—3;

b) heating the premix to about 88—102°F (31—39°C);

c) blending in fat to provide a ratio of sugar solids to added fat in the premix of about 1:1.5—5; and

d) heating the fat-containing blend for a period of time sufficient to lower the water content of the mixture to about 5—10% and to partially caramelize the non-crystallizing sugars while maintaining the sucrose in a non caramelized condition; and

e) cooling said blend to room temperature to provide a homogeneous binder composition which is plastically deformable and substantially non-crystalline at room temperature.

23. The process of claim 22 wherein the fat-containing premix is heated to about 230—290°F (110—143°C).

24. The process of claim 22 or 23 wherein the edible polyhydric alcohol comprises glycerin.

25. The process of claim 22, 23 or 24 wherein the non-crystallizing sugars comprise invert sugar.

26. The process of claim 22, 23, 24 or 25 wherein the fat comprises a plastic shortening.

27. A process for the preparation of an edible composition comprising:

a) forming a premix of about 15—25% sucrose, about 17—30% of an about 28—75 D.E. corn syrup; about 10—15% honey, about 0.25—1.5% lecithin, about 15—25% water and about 3—7% glycerin;

b) heating said premix to about 88—102°F (31—39°C);

c) adding about 10—15% plastic shortening to the heated premix; and

d) heating the fat-containing premix to about 240—270°F (116—132°C) for a period of time sufficient to reduce the water content of the premix to about 5—10% and to partially caramelize the non-crystallizing sugars, to provide a homogeneous binder composition which is plastically deformable and substantially non-crystalline at room temperature.

28. The process of claim 27 wherein the water content is reduced to about 4—8%.

29. The process of any of claims 22 to 28 wherein the binder composition is plastically deformable to the extent of about 50% by a pressure of about 0.15—3.0 kg/cm².

30. The process of any of claims 22 to 29 further comprising blending solid ingredients selected from nutmeats, fruit, processed cereal products and mixtures thereof with the binder composition, followed by cooling and shaping the blend into a flexible, moist food bar which exhibits a flexibility of about 5—20 kg and a tensile strength of about 0.1—0.6 kg/cm.

31. The process of claim 30 wherein the ratio of solid ingredients to the binder composition is about 1:1.25—2.5.

32. The process of claim 30 or 31 wherein the nutmeats comprise at least about 35—50% of the solid ingredients.

33. The process of claim 30 wherein the food bar comprises about 15—30% nuts, about 5—25% fruit and about 15—25% granola.

34. A process for the preparation of an edible composition comprising:

a) forming a premix of about 10—30% sucrose, about 17—30% of about 30—50 D.E. corn syrup; about 10—15% honey, about 0.25—1.5% emulsifier, about 15—25% water and about 3—7% glycerin;

b) heating said premix to about 88—102°F (31—39°C);

c) adding about 10—25% plastic shortening to the heated premix;

d) heating the fat containing premix to about 240—270°F (116—132°C) for a time sufficient to reduce the water content of the premix to about 5—10% and to partially caramelize the noncrystallizing sugars whereby a substantially homogeneous binder composition is formed comprising about 5—10% water, about 15—30% shortening, about 20—30% sucrose and wherein the ratio of sucrose to noncrystallizing sugars is about 1:1—2;

e) mixing the binder composition with solid ingredients in a ratio of about 1:1—3 wherein the solid ingredients are selected from nutmeats, fruit, processed cereal and mixtures thereof; and

f) cooling and shaping the blend into a flexible, moist food bar which exhibits a tensile strength of about 0.1—0.6 kg/cm² and a flexibility of about 5—20 kg at ambient temperatures.

8

35. The process of claim 34 wherein the shortening comprises a mixture of partially hydrogenated palm kernel and soybean oil having a Wiley Melting Point of from about 90—100°F (32—38°C).

36. The process of claim 34 or 35 wherein nutmeats comprise at least about 35—50% of the solid ingredients.

37. The process of claim 34, 35 or 36 wherein the bar comprises about 15—35% nutmeats, about 5—25% fruit and about 15—25% cereal.

38. A method for preparing a food binder composition comprising:

a) forming a substantially homogeneous aqueous mixture of about 10 to 30% sucrose, about 15 to 40% water, at least one non-crystallizable sugar which is caramelizable at a temperature below about 300°F (149°C), and fat in a weight ratio to total sugar solids of about 1:1.5—5;

b) heating said substantially homogeneous blend at a temperature sufficient to at least partially caramelize the caramelizable non-crystalline sugar without caramelizing the sucrose; and

c) cooling said heated blend at room temperature to provide a binder composition which is plastically deformable and substantially non-crystalline.

## Patentansprüche

1. Eßbare Zusammensetzung zum Binden von festen Nahrungsmittelstoffen, umfassend eine im wesentlichen homogene Mischung aus ungefähr 5—10% Wasser, Zucker und ungefähr 15—30% Fett, worin das Verhältnis von Zucker zu Fett ungefähr 1:1,5—5 beträgt, die Zuckerkomponente Sucrose und eine zweite Zuckerkomponente, bestehend aus einem oder mehreren teilweise karamelisierten, nicht kristallisierenden Zuckern, umfaßt, worin das Verhältnis von Sucrose zur genannten zweiten Zuckerkomponente ungefähr 1:0,8—3 beträgt, und wobei die Zusammensetzung bei Raumtemperatur im wesentlichen nicht kristallin und plastisch verformbar ist.

2. Zusammensetzung nach Anspruch 1, weiters enthaltend ungefähr 3—7 Gew.-% eines genießbaren Polyalkohols.

3. Zusammensetzung nach Anspruch 2, in welcher der Alkohol Glycerin ist.

4. Zusammensetzung nach einem der vorhergehenden Ansprüche, weiters enthaltend ungefähr 0,25—1,5% Lecithin.

5. Zusammensetzung nach einem der vorhergehenden Ansprüche, in welcher die nicht kristallisierenden Zucker eine Mischung aus Getreidesirup und Honig sind.

6. Zusammensetzung nach einem der vorhergehenden Ansprüche, enthaltend ungefähr 20—30% Sucrose.

7. Zusammensetzung nach Anspruch 4, in welcher das Fett einen Wiley Schmelzpunkt im Bereich von ungefähr 88—102°F (31—39°C) hat und eine geringe Menge eines Emulgators enthält.

8. Zusammensetzung nach Anspruch 7, in welcher das Verhältnis von Zuckerfeststoffen zu Fett ungefähr 1:2—4 beträgt.

9. Eine eßbare Bindemittelzusammensetzung zum Binden von festen Nahrungsmittelstoffen, umfassend eine im wesentlichen homogene Mischung aus:

(a) ungefähr 4—8% Wasser;

(b) ungefähr 15—30% einer plastischen Mischung von teilweise hydrogeniertem Palmkern- und Sojabohnenöl;

(c) ungefähr 0,25—1,5% Lecithin;

(d) ungefähr 20—30% Sucrose;

(e) ungefähr 3—7% Glycerin; und

(f) einem oder mehreren teilweise karamelisierten Zuckern, wobei das Verhältnis von Sucrose zur teilweise karamelisierten Zuckerkomponente ungefähr 1:1—2 beträgt, und die Zusammensetzung bei Raumtemperatur im wesentlichen nicht kristallin und plastisch verformbar ist.

10. Zusammensetzung nach Anspruch 9, in welcher das Verhältnis von Zuckerfeststoffen zu Fett ungefähr 1:2—4 beträgt.

11. Zusammensetzung nach Anspruch 9 oder 10, in welcher die nicht kristallisierenden Zucker Invertzucker umfassen.

12. Zusammensetzung nach Anspruch 9, 10 oder 11, in welcher der Wiley Schmelzpunkt der Öle ungefähr 90—100°F (32—38°C) beträgt.

13. Zusammensetzung nach einem der vorhergehenden Ansprüche, welche bei einem Druck von ungefähr 0,15—3 kg/cm$^2$ in einem Ausmaß von ungefähr 50% plastisch verformbar ist.

14. Zusammensetzung nach Anspruch 13, in welcher der Druck ungefähr 0,175—2,5 kg/cm$^2$ beträgt.

15. Biegsamer, feuchter Nahrungsriegel, enthaltend feste Bestandteile zusammen mit eine Matrix aus der Zusammensetzung nach einem der vorhergehenden Ansprüche.

16. Riegel nach Anspruch 15, in welchem das Verhältnis von Bindemittel zu festen Bestandteilen ungefähr 1:1—3 beträgt.

17. Riegel nach Anspruch 15 oder 16, in welchem die Bestandteile aus Nußfleisch, Früchten, behandelten Zerealien und Mischungen derselben ausgewählt werden.

18. Riegel nach Anspruch 17, in welchem das Nußfleisch mindestens ungefähr 35—50 Gew.% der festen Bestandteile umfaßt.

EP 0 138 582 B1

19. Riegel nach Anspruch 16, welcher eine Biegsamkeit von ungefähr 5—20 kg und eine Zugfestigkeit von ungefähr 0,1—0,6 kg/cm² aufweist.

20. Riegel nach Anspruch 19, enthaltend ungefähr 15—35% Nußfleisch, ungefähr 5—25% Früchte und ungefähr 15—25% behandelte Zerealien, und in welchem das Verhältnis von Bindemittel zu festen Bestandteilen ungefähr 1:1,25—2,5 beträgt.

21. Riegel nach Anspruch 20, in welchem der Zerealienteil Granola ist.

22. Verfahren zur Herstellung einer eßbaren Nahrungsmittelzusammensetzung, umfassend:

a) Herstellen einer Vormischung aus ungefähr 10—30% Sucrose, ungefähr 15—40% Wasser, einem genießbaren Polyalkohol, geringe wirksame Mengen Emulgator und einen oder mehrere nicht kristallisierende Zucker; worin das Verhältnis von Sucrose zu nicht kristallisierendem Zucker ungefähr 1:0,8—3 beträgt.

b) Erwärmen der Vormischung auf ungefähr 88—102°F (31—39°C);

c) Zumischen von Fett zur Herstellung eines Verhältnisses von Zuckerfeststoffen zu beigemischtem Fett in der Vormischung von ungefähr 1:1,5—5; und

d) Erwärmen der fetthaltigen Mischung über einen Zeitraum, der ausreicht, den Wassergehalt der Mischung auf ungefähr 5—10% zu reduzieren und die nicht kristallisierenden Zucker teilweise zu karamelisieren, während die Sucrose in nicht karamelisiertem Zustand gehalten wird; und

e) Abkühlen dieser Mischung auf Raumtemperatur zur Herstellung einer homogenen Bindemittelzusammensetzung, die plastisch verformbar und bei Raumtemperatur im wesentlichen nicht kristallin ist.

23. Verfahren nach Anspruch 22, in welchem die fetthaltige Vormischung auf ungefähr 230—290°F (110—143°C) erhitzt wird.

24. Verfahren nach Anspruch 22 oder 23, in welchem der genießbare Polyalkohol Glycerin umfaßt.

25. Verfahren nach Anspruch 22, 23 oder 24, in welchem die nicht kristallisierenden Zucker Invertzucker umfassen.

26. Verfahren nach Anspruch 22, 23, 24 oder 25, in welchem das Fett ein plastisches Backfett umfaßt.

27. Verfahren zur Herstellung einer eßbaren Zusammensetzung, umfassend:

a) Herstellen einer Vormischung aus ungefähr 15—25% Sucrose, ungefähr 17—30% eines Getreidesirups mit ungefähr 27—75 D.E.; ungefähr 10—15% Honig, ungefähr 0,25—1,5% Lecithin, ungefähr 15—25% Wasser, und ungefähr 3—7% Glycerin;

b) Erwärmen dieser Vormischung auf ungefähr 88—102°F (31—39°C);

c) Zugeben von ungefähr 10—15% plastischem Backfett zur erwärmten Vormischung; und

d) Erhitzen der fetthaltigen Vormischung auf ungefähr 240—270°F (116—132°C) über einen Zeitraum, der ausreicht, den Wassergehalt der Vormischung auf ungefähr 5—10% zu reduzieren und die nicht kristallisierenden Zucker teilweise zu karamelisieren, um eine homogene Bindemittelzusammensetzung herzustellen, die plastisch verformbar und bei Zimmertemperatur im wesentlichen nicht kristallin ist.

28. Verfahren nach Anspruch 27, in welchem der Wassergehalt auf ungefähr 4—8% reduziert wird.

29. Verfahren nach einem der Ansprüche 22 bis 28, in welchem die Bindemittelzusammensetzung durch einen Druck von ungefähr 0,15—3,0 kg/cm² in einem Ausmaß von ungefähr 50% plastisch verformbar ist.

30. Verfahren nach einem der Ansprüche 22 bis 29, weiters umfassend: Mischen von festen Bestandteilen, ausgewählt aus Nußfleisch, Früchten, behandelten Zerealienprodukten und Mischungen derselben mit der Bindemittelzusammensetzung, gefolgt von Abkühlen und Formen der Mischung zu einem biegsamen, feuchten Nahrungsriegel, der eine Biegsamkeit von ungefähr 5—20 kg und eine Zugfestigkeit von ungefähr 0,1—0,6 kg/cm² hat.

31. Verfahren nach Anspruch 30, in welchem das Verhältnis von festen Bestandteilen zur Bindemittelzusammensetzung ungefähr 1:1,25—2,5 beträgt.

32. Verfahren nach Anspruch 30 oder 31, in welchem das Nußfleisch mindestens 35—50% der festen Bestandteile umfaßt.

33. Verfahren nach Anspruch 30, in welchem der Nahrungsriegel ungefähr 15—30% Nüsse, ungefähr 5—25% Früchte und ungefähr 15—25% Granola enthält.

34. Verfahren zur Herstellung einer eßbaren Zusammensetzung, umfassend:

(a) Herstellen einer Vormischung aus ungefähr 10—30% Sucrose, ungefähr 17—30% Getreidesirup mit ungefähr 30—50 D.E.; ungefähr 10—15% Honig, ungefähr 0,25—1,5% Emulgator, ungefähr 15—25% Wasser und ungefähr 3—7% Glycerin;

(b) Erwärmen dieser Vormischung auf ungefähr 88—102°F (31—39°C);

(c) Zugeben von ungefähr 10—25% plastischem Backfett zur erwärmten Vormischung;

(d) Erhitzen der fetthaltigen Vormischung auf ungefähr 240—270°F (116—132°C) über einen Zeitraum, der ausreicht, den Wassergehalt der Vormischung auf ungefähr 5—10% zu reduzieren und die nicht kristallisierenden Zucker teilweise zu karamelisieren, wobei eine im wesentlichen homogene Bindemittelzusammensetzung, enthaltend ungefähr 5—10% Wasser, ungefähr 15—30% Backfett, ungefähr 20—30% Sucrose, hergestellt wird, und in welcher das Verhältnis von Sucrose zu nicht kristallisierenden Zuckern ungefähr 1:1—2 beträgt;

(e) Mischen der Bindemittelzusammensetzung mit festen Bestandteilen in einem Verhältnis von

10

EP 0 138 582 B1

ungefähr 1:1—3, wobei die festen Bestandteile ausgewählt weden aus Nußfleish, Früchten, behandelten Zerealien und Mischungen derselben; und

(f) Abkühlen und Formen der Mischung zu einem biegsamen, feuchten Nahrungsriegel, der bei Raumtemperatur eine Zugfestigkeit von ungefähr 0,1—0,6 kg/cm² und eine Biegsamkeit von ungefähr 5—20 kg aufweist.

35. Verfahren nach Anspruch 34, in welchem das Backfett eine Mischung aus teilweise hydriertem Palmkern- und Sojabohnenöl mit einem Wiley Schmelzpunkt von ungefähr 90—100°F (32—38°C) enthält.

36. Verfahren nach Anspruch 34 oder 35, in welchem das Nußfleisch mindestens ungefähr 35—50% der festen Bestandteile umfaßt.

37. Verfahren nach Anspruch 34, 35 oder 36, in welchem der Riegel ungefähr 15—35% Nußfleische, ungefähr 5—25% Früchte und ungefähr 15—25% Zerealien enthält.

38. Verfahren zur Herstellung einer Nahrungsbindemittelzusammensetzung, umfassend:

a) Herstellen einer im wesentlichen homogenen, wäßrigen Mischung aus ungefähr 10 bis 30% Sucrose, ungefähr 15 bis 40% Wasser, mindestens einem nicht kristallisierbaren Zucker, der bei einer Temperatur unter ungefähr 300°F (149°C) karamelisierbar ist, und Fett in einem Gewichtsverhältnis zu Zuckerfeststoffen von ungefähr 1:1,5—5;

b) Erwärmen dieser im wesentlichen homogenen Mischung auf eine Temperatur, die ausreicht, den karamesierbaren, nicht kristallinen Zucker zumindest teilweise zu karamelisieren, ohne die Sucrose zu karamelisieren; und

c) Abkühlen dieser erwärmten Mischung auf Raumtemperatur zur Herstellung einer Bindemittelzusammensetzung, die plastisch verformbar und im wesentlichen nicht kristallin ist.


## Revendications

1. Composition comestible en vue de lier des substances alimentaires solides comportant un mélange sensiblement homogène d'environ 5—10% d'eau, de sucre, et d'environ 15—30% de matières grasses, dans laquelle le rapport du sucre aux matières grasses est d'environ 1:1,5—5, le composant sucre comporte du saccharose et un second composant sucre constitué d'un ou de plusieurs sucres non cristallisables partiellement caramélisés dans laquelle le rapport du saccharose audit second composant sucre est d'environ 1:0,8—3, et dans laquelle la composition est sensiblement non cristalline et déformable plastiquement à température ambiante.

2. Composition selon la revendication 1, comportant en outre environ 3—7% en poids d'un alcool polyhydrique comestible.

3. Composition selon la revendication 2, dans laquelle l'alcool est de la glycérine.

4. Composition selon l'une quelconque des revendications précédentes, comportant en outre environ 0,25—1,5% de lécithine.

5. Composition selon l'une quelconque des revendications précédentes, dans laquelle les sucres non cristallisables sont constitués par un mélange de sirop de maïs et de miel.

6. Composition selon l'une quelconque des revendications précédentes, comportant environ 20—30% de saccharose.

7. Composition selon la revendication 4, dans laquelle les matières grasses ont un point de fusion de Wiley compris entre 31 et 39°C et comprennent une faible quantité d'un émulsifiant.

8. Composition selon la revendication 7, dans laquelle le rapport des sucres aux matières grasses est d'environ 1:2—4.

9. Composition de liant comestible utilisable pour lier des substances alimentaires solides, comportant un mélange sensiblement homogène de:

(a) environ 4—8% d'eau;

(b) environ 15 à 30% d'un mélange plastique d'huile d'amandes de palme et de soja partiellement hydrogénée;

(c) environ 0,25—1,5% de lécithine;

(d) environ 20—30% de saccharose;

(e) environ 3—7% de glycérine; et

(f) un ou plusieurs sucres non cristallisables partiellement caramélisé(s), dans lequel le rapport de saccharose audit composant sucre partiellement caramélisé est d'environ 1:1—2, et dans lequel la composition est sensiblement non cristalline et plastiquement déformable à température ambiante.

10. Composition selon la revendication 9, dans laquelle le rapport des sucres aux matières grasses est d'environ 1:2—4.

11. Composition selon la revendication 9 ou 10, dans laquelle les sucres non cristallisables comportent du sucre inverti.

12. Composition selon la revendication 9, 10 ou 11, dans laquelle le point de fusion de Wiley des huiles est d'environ 32—38°C.

13. Composition selon l'une quelconque des revendications précédentes, qui est plastiquement déformable d'environ 50% par une pression d'environ 0,15—3 kg/cm².

14. Composition selon la revendication 13 dans laquelle la pression est d'environ 0,175—2,5 kg/cm².

15. Barre comestible tendre, flexible, comportant des ingrédients solides liés les uns aux autres par une matrice de la composition selon l'une quelconque des revendications précédentes.

16. Barre selon la revendication 15, dans laquelle le rapport de liant aux ingrédients solides est d'environ 1:1—3.

17. Barre selon la revendication 15 ou 16 dans laquelle les ingrédients solides sont choisis parmi les noix, les fruits, les céréales traitées et des mélanges de ceux-ci.

18. Barre selon la revendication 17, dans laquelle les noix constituent au moins environ 35—50% en poids des ingrédients solides.

19. Barre selon la revendication 16, présentant une flexibilité d'environ 5—20 kg et une résistance à la traction d'environ 0,1—0,6 kg/cm$^2$.

20. Barre selon la revendication 19, comportant environ 15—35% de noix, environ 5—25% de fruits et environ 15—25% de céréales traitées, et dans laquelle le rapport du liant aux ingrédients solides est d'environ 1:1,25—2,5.

21. Barre selon la revendication 20, dans laquelle les céréales sont des céréales traitées.

22. Procédé de préparation d'une composition comestible comportant les étapes consistant à:

a) former un mélange préalable d'environ 10—30% de saccharose, d'environ 15—40% d'eau, d'un alcool polyhydrique comestible, de faibles quantités d'émulsifiant et d'un ou de plusieurs sucres non cristallisables; dans lequel le rapport de saccharose aux sucres non cristallisables est d'environ 1:0,0—3,

b) chauffer le mélange préalable à environ 31—39°C,

c) mélanger dans de la matière grasse pour obtenir un rapport de sucres à la matière grasse ajoutée au mélange préalable d'environ 1:1,5—5; et

d) chauffer le mélange contenant la matière grasse pendant une durée suffisante pour abaisser la teneur en eau du mélange à environ 5—10% et pour caraméliser partiellement les sucres non cristallisables tout en maintenant le saccharose dans un état non caramélisé; et

e) refroidir ledit mélange à la température ambiante pour constituer une composition de liant homogène plastiquement déformable et sensiblement non cristalline à température ambiante.

23. Procédé selon la revendication 22, dans lequel le mélange préalable contenant les matières grasses est chauffé à environ 110—143°C.

24. Procédé selon la revendication 22 ou 23, dans lequel l'alcool polyhydrique comestible est de la glycérine.

25. Procédé selon la revendication 22, 23 ou 24, dans lequel les sucres non cristallisables comportent du sucre inverti.

26. Procédé selon la revendication 22, 23, 24 ou 25, dans lequel les matières grasses comportent une matière grasse plastique.

27. Procédé de préparation d'une composition comestible comportant les étapes consistant à:

a) former un mélange préalable d'environ 15—25% de saccharose, d'environ 17—30% d'un sirop de maïs d'environ 28—75 D.E.; d'environ 10—15% de miel, d'environ 0,25—1,5% de lécithine, d'environ 15—25% d'eau et d'environ 3—7% de glycérine;

b) chauffer ledit mélange préalable à environ 31—39°C;

c) ajouter environ 10 à 15% de matière grasse plastique au mélange préalable chauffé; et

d) chauffer le mélange préalable contenant la matière grasse à environ 116—132°C pendant une durée suffisante pour réduire la teneur en eau du mélange préalable à environ 5—10% et pour caraméliser partiellement les sucres non cristallisables, pour constituer une composition de liant homogène plastiquement déformable et sensiblement non cristalline à température ambiante.

28. Procédé selon la revendication 27, dans lequel la teneur en eau est réduite à environ 4—8%.

29. Procédé selon l'une quelconque des revendications 22 à 28, dans lequel la composition de liant est plastiquement déformable d'environ 50% par une pression d'environ 0,15—3,0 kg/cm$^2$.

30. Procédé selon l'une quelconque des revendications 22 à 29, comportant en outre le mélange d'ingrédients solides choisis parmi les noix, les fruits, les céréales traitées et des mélanges de ceux-ci à la composition de liant, suivi d'un refroidissement et d'un façonnage du mélange en une barre comestible tendre, flexible présentant une flexibilité d'environ 5—20 kg et une résistance à la traction d'environ 0,1—0,6 kg/cm.

31. Procédé selon la revendication 30, dans lequel le rapport d'ingrédients solides à la composition de liant est d'environ 1:1,15—2,5.

32. Procédé selon la revendication 30 ou 31, dans lequel les noix constituent au moins 35—50% des ingrédients solides.

33. Procédé selon la revendication 30, dans lequel la barre comestible comporte environ 15—30% de noix, environ 5—25% de fruits et environ 15—25% de céréales traitées.

34. Procédé de préparation d'une composition comestible comportant les étapes consistant à:

(a) former un mélange préalable d'environ 10—30% de saccharose, d'environ 17—30% d'un sirop de maïs d'environ 30—50 D.E.; d'environ 10—15% de miel, d'environ 0,25—1,5% d'émulsifiant, d'environ 15—25% d'eau et d'environ 3—7% de glycérine;

(b) chauffer ledit mélange préalable à environ 31—39°C;

(c) ajouter environ 10—25% de matière grasse plastique au mélange préalable chauffé;

(d) chauffer le mélange préalable contenant la matière grasse à environ 116—132°C pendant une durée suffisante pour réduire la teneur en eau du mélange préalable à environ 5—10% et pour caraméliser partiellement les sucres non cristallisables de manière à former une composition de liant sensiblement homogène comportant environ 5—10% d'eau, environ 15—30% de matière grasse, environ 20—30% de saccharose et dans laquelle le rapport de saccharose aux sucres non cristallisables est d'environ 1:1—2;

(e) mélanger la composition de liant aux ingrédients solides dans un rapport d'environ 1:1—3 dans laquelle les ingrédients solides sont choisis parmi les noix, les fruits, les céréales traitées et des mélanges de ceux-ci; et

(f) refroidir et façonner le mélange en une barre comestible tendre, flexible présentant une résistance à la traction d'environ 0,1—0,6 kg/cm$^2$ et une flexibilité d'environ 5—20 kg à température ambiante.

35. Procédé selon la revendication 34, dans lequel la matière grasse comporte un mélange d'huile d'amandes de palme et de soja partiellement hydrogénée possédant un point de fusion de Wiley compris entre 32 et 38°C.

36. Procédé selon la revendication 34 ou 35, dans lequel les noix constituent au moins environ 35—50% des ingrédients solides.

37. Procédé selon la revendication 34, 35 ou 36, dans lequel la barre comporte environ 15—35% de noix, environ 5—25% de fruits et environ 15—25% de céréales.

38. Procédé de préparation d'une composition de liant alimentaire, comportant les étapes consistant à:

a) former un mélange aqueux sensiblement homogène d'environ 10 à 30% de saccharose, d'environ 15 à 40% d'eau, d'au moins un sucre non cristallisable pouvant être caramélisé à une température inférieure à 149°C et de matières grasses selon un rapport en poids vis-à-vis de la totalité des sucres d'environ 1:1,5—5;

b) chauffer ledit mélange sensiblement homogène à une température suffisante pour au moins caraméliser partiellement le sucre non cristallisable caramélisable sans caraméliser le saccharose; et

c) refroidir ledit mélange chauffé à température ambiante pour constituer une composition de liant plastiquement déformable et sensiblement non cristalline.